# EUROPEAN PATENT APPLICATION

(11) **EP 4 550 232 A1**
(43) Date of publication of application: **07.05.2025**
(21) Application number: 23206707.4
(22) Date of filing: 30.10.2023
(51) Int. Cl.: G06Q 10/06

(54) **METHOD AND SYSTEM FOR MANAGING MACHINERY-AS-A-SERVICE CONTRACT INVOLVING MULTIPLE STAKEHOLDERS**

(71) Applicant: Siemens Aktiengesellschaft, 80333 München (DE)
(72) Inventor: Roux, Armin, 91315 Höchstadt a. d. Aisch (DE); B R, Chethan Rav, 577134 Chickmagalur District, Karnataka (IN); Cardoz, Basil, 403110 Goa (IN); RR, Muralidharan, 641022 Coimbatore, Tamil Nadu (IN); Singam, Srividhya, 518360 Kurnool District, Andhra Pradesh (IN); Amin, Fakabbir, 560100 Bangalore, Karnataka (IN); Chaitanya, O.V.R.Krishna, 560067 Bangalore, Karnataka (IN)
(74) Representative: Isarpatent

(57) **Abstract**

Disclosed is a system (200) and method (100) for managing a machinery-as-a-service (MaaS) contract involving multiple stakeholders (302-308), including machinery provider(s) and machinery user(s). The method includes steps of receiving machinery-specific requirements from the stakeholders (302-308), and orchestrating mathematical models (316a-316n) of the product, which models its properties and behaviours. A plurality of derived mathematical models (318) is generated based on these specific parameters received from stakeholders. Multiple usage scenarios of the product are then evaluated, simulating the performance of the machinery across the derived mathematical models. The method involves defining a set of Key Performance Indicators (KPIs) based on evaluations of the scenarios, monitoring operational data related to machinery usage, and comparing this data against the KPIs to assess performance of the machinery. The method further involves generating business model(s) for the machinery, based on the performance assessment.

## Description

The present invention relates generally to the field of digital transformation and contract management. More specifically, the present invention relates to a computer-implemented method and system for managing a machinery-as-a-service contract in a multi-stakeholder environment including machinery provider(s) and machinery user(s), through orchestrating digital replicas (virtual twins) to evaluate Key Performance Indicators (KPIs), and to build dynamic business models.

The business world has been steadily shifting towards a service-oriented model in recent years, a trend driven by the advent of digital transformation, the rise of the Internet of Things (IoT), and the increasing demand for flexible and customised solutions. In this new model, businesses no longer sell products (for example, machinery) in the traditional sense but provide them as services. This is referred to as the "Machinery-as-a-service" (MaaS) model, where the machinery is owned by machinery provider(s) and used by machinery user(s) under a service contract. The MaaS model has been adopted in various sectors, including transportation, healthcare, energy, and manufacturing. This model offers significant advantages, such as reduced upfront costs for customers, predictable revenue streams for providers, and the potential for more sustainable and efficient product use. In particular, in the MaaS model, the machinery provider(s) retain ownership of the product, extending its usage to the machinery user(s) (i.e., customers) under a service agreement. Industries spanning transportation, healthcare, energy, and manufacturing have embraced the MaaS model, leveraging its benefits, which include diminished initial expenses for the machinery user(s), consistent revenue for the machinery providers, and opportunities for more sustainable and efficient utilization of the machinery.

However, managing a MaaS contract may be complex, especially when multiple stakeholders are involved, including machinery provider(s) and machinery user(s). Each stakeholder in a MaaS contract has specific requirements and expectations for the product's performance. These requirements and expectations need to be taken into account when designing and managing the contract. Machinery providers, for instance, might prioritize ensuring optimal machinery longevity, minimizing downtime, and maintaining the machinery's operational efficiency, while the machinery users may focus on the machinery's output quality, operational speed, and reliability. There is a lack of a framework which may help the stakeholders to identify right business model for their requirements and to monitor if the defined terms and conditions are followed during operation. It is also vital for the success of such framework to be able to provide enough insights by considering less amount of data, to reduce requirements of installing additional sensors. Another major gap in such framework is the lack of trust between the different stakeholders. For example, the end-customer would always be interested in knowing whether he is being provided with the performance mentioned in the contract. Furthermore, managing these diverse requirements in a cohesive way, satisfying all the involved stakeholders, is a significant challenge.

Traditionally, contract management in a MaaS model has been largely manual, involving a high degree of human intervention. Contracts are typically negotiated and signed at the start of the business relationship, and their terms and conditions remain unchanged until the end of the contract term. This approach is time-consuming, error-prone, and inflexible, hindering the effective management of MaaS contracts. Furthermore, traditional contract management relies heavily on historical data and subjective judgments. For instance, the product's performance is often assessed based on past performance data and the stakeholders' subjective impressions. This approach lacks the precision and objectivity needed to accurately assess the product's performance and make informed decisions. Moreover, the use of historical data limits the ability to anticipate future performance trends and make proactive adjustments.

To address these challenges, there have been efforts to digitize contract management. Digital contract management systems automate various aspects of contract management, such as contract creation, execution, and monitoring. These systems use digital technologies like artificial intelligence, blockchain, and cloud computing to enhance contract management's efficiency and effectiveness. However, existing digital contract management systems still have limitations. For instance, many of these systems are still not able to fully capture and manage the diverse requirements of multiple stakeholders. They often lack the flexibility to adjust contract terms and conditions dynamically in response to changing requirements and performance data. Moreover, these systems typically do not provide comprehensive and nuanced insights into the product's performance dynamics, making it difficult to make informed decisions. Furthermore, current digital contract management systems often struggle with data integration. They are not always able to seamlessly integrate data from different sources, such as the product's operational data, the stakeholders' requirements, and the contract terms and conditions. This lack of data integration hampers the systems' ability to provide a holistic view of performance of the product and status of the contract.

In recent years, the concept of mathematical models and virtual twins (or digital twins) has gained popularity as tools for understanding and managing complex systems. A mathematical model is an abstract description of a concrete system using mathematical concepts and language. A virtual twin is a digital replica of a physical entity, such as a product or system, that models its properties and behaviours. Such mathematical models and virtual twins may orchestrate or simulate the entity's performance under various conditions, providing valuable insights for decision-making. Despite the potential benefits, the application of the mathematical models and virtual twins in MaaS contract management is still relatively unexplored.

Given these considerations, there is a need for a more advanced framework for managing MaaS contracts. This framework should be able to effectively capture and manage the diverse requirements of multiple stakeholders, adjust contract terms and conditions dynamically in response to performance data, and provide comprehensive and nuanced insights into the product's performance. Moreover, the framework should seamlessly integrate data from different sources to provide a holistic view of performance of the product and status of the contract.

The present invention seeks overcome these challenges by providing a computer-implemented method and system for managing a MaaS contract by utilizing the concept of mathematical models and virtual twins, real-time data monitoring, and performance evaluation.

Specifically, to facilitate this intricate multi-stakeholder environment, the system may simulate machinery performance under diverse scenarios, using mathematical models, to evaluate one or more dynamic business models, thereby allowing stakeholders to align their expectations and requirements efficiently. Unlike the conventional methods, the utilization of mathematical models offers a faster and more efficient means of simulating machinery, enabling the derivation of various models based on specific parameters to evaluate multiple usage scenarios and optimize performance.

The object of the present invention is achieved by a computer-implemented method for managing a machinery-as-a-service contract involving machinery provider(s) and machinery user(s). The method comprises receiving, by a processing unit, requirements including one or more specific parameters from the machinery user(s) for a machinery. The method further comprises orchestrating, by the processing unit, one or more mathematical models representative of the machinery to generate a plurality of derived one or more mathematical models based on the one or more specific parameters, wherein the one or more mathematical models are defined to model properties and behaviours of the machinery. The method further comprises evaluating, by the processing unit, multiple usage scenarios of the machinery based on the received requirements, wherein each of the multiple scenarios is evaluated on each of the plurality of derived one or more mathematical models to simulate performance of the machinery. The method further comprises defining, by the processing unit, a set of Key Performance Indicators (KPIs) for monitoring performance of the machinery based on the evaluated multiple scenarios. The method further comprises monitoring, by the processing unit, operational data associated with usage of the machinery. The method further comprises comparing, by the processing unit, the monitored operational data against the defined set of KPIs to assess the performance of the machinery. The method further comprises generating, by the processing unit, one or more business models for the machinery provider(s) and the machinery user(s) based on the assessment of the performance of the machinery.

In one or more embodiments, the step of orchestrating the one or more mathematical models representative of the machinery comprises selecting, by the processing unit, the one or more mathematical models from a library of mathematical models based on the received requirements.

In one or more embodiments, the step of evaluating multiple usage scenarios of the machinery based on the received requirements comprises implementing, by the processing unit, the plurality of derived one or more mathematical models to simulate expected performance of the machinery under the multiple usage scenarios.

In one or more embodiments, the step of defining the set of KPIs for monitoring performance of the machinery based on the evaluated multiple scenarios comprises identifying, by the processing unit, specific parameters in the one or more mathematical models that are relevant to the received requirements, wherein the specific parameters comprise one or more of physical properties, functional properties, operational conditions, usage patterns, different configuration, retro-fittings, layouts and lifecycle events of the machinery. This step further comprises varying, by the processing unit, the identified specific parameters within predetermined ranges based on the received requirements to compute values of the set of KPIs.

In one or more embodiments, the step of monitoring the operational data associated with usage of the machinery comprises gathering, by the processing unit, data related to the performance of the machinery from one or more of: sensors embedded in the machinery, usage logs, and feedback from the machinery user(s).

In one or more embodiments, the step of generating the one or more business models based on the assessment of the performance of the machinery comprises generating, by the processing unit, a digital contract of a dynamic business model with respective terms and conditions for each of the one or more business models.

In one or more embodiments, the terms and conditions comprise one or more of operational parameters, efficiency, lifespan, service levels, pricing, and penalties for non-compliance, related to the machinery based on the defined set of KPIs.

In one or more embodiments, the method further comprises automatically adapting, by the processing unit, the terms and conditions of the digital contract based on the assessment of the performance of the machinery.

In one or more embodiments, the method further comprises notifying, by the processing unit, the machinery provider(s) and the machinery user(s) regarding the automated adaptations made to the terms and conditions of the digital contract.

In one or more embodiments, the method further comprises alerting, by the processing unit, the machinery provider(s) and the machinery user(s) when the performance of the machinery continuously does not meet the defined set of KPIs for a predetermined period.

In one or more embodiments, the method further comprises creating, by the processing unit, a knowledge graph by: collecting data from the defined set of KPIs and the corresponding monitored operational data; processing the collected data to identify relationships between the KPIs and the corresponding operational data, wherein the relationships include correlations, dependencies, trends, patterns, or anomalies; assigning semantic tags to the KPIs and the operational data based on the identified relationships; constructing nodes for the semantically tagged KPIs and the operational data; and linking the nodes based on the identified relationships to create a network of interconnected nodes that represents the semantic relationships between the KPIs and the operational data.

In one or more embodiments, the method further comprises updating, by the processing unit, the knowledge graph in near real-time as new operational data is monitored and/or as the KPIs are updated based on the assessment.

In one or more embodiments, the method further comprises utilizing, by the processing unit, the knowledge graph to determine decisions related to the machinery-as-a-service contract, wherein the decisions comprise one or more of defining or adjusting the one or more specific parameters, and comparing the monitored operational data against the defined set of KPIs.

The object of the present invention is also achieved by a system comprising a processing unit and a memory unit configured to execute the steps of the computer-implemented method according to any one of the preceding method steps.

The object of the present invention is further achieved by a computer program product, having machine-readable instructions stored therein, that when executed by the processing unit, cause the processing unit to perform aforementioned method steps.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
- FIG 1: is a flowchart representation of a computer-implemented method for managing a machinery-as-a-service contract involving multiple stakeholders, in accordance with one or more embodiments of the present invention;
- FIG 2: is a block diagram representation of a system for managing the machinery-as-a-service contract involving multiple stakeholders, in accordance with one or more embodiments of the present invention;
- FIG 3: is a schematic diagram representation of an overall architecture of the system for managing the machinery-as-a-service contract involving multiple stakeholders, in accordance with one or more embodiments of the present invention;
- FIG 4: is a schematic diagram representation of architecture for an orchestration module for the system of FIG 3, in accordance with one or more embodiments of the present invention;
- FIG 5: is a schematic of a process flow for managing the machinery-as-a-service contract involving multiple stakeholders, in accordance with one or more embodiments of the present invention;
- FIG 6: is a flow diagram representation for handling of queries from multiple stakeholders, in accordance with one or more embodiments of the present invention;
- FIG 7: is a schematic diagram representation of a workflow for managing the machinery-as-a-service contract involving multiple stakeholders, in accordance with one or more embodiments of the present invention;
- FIG 8: is a representation of implementation of the system for a use-case of manufacturing a product, in accordance with one or more embodiments of the present invention;
- FIG 9: is a representation of implementation of the system for a use-case of enhancing Jobs Per Hour (JPH) in manufacturing of a product, in accordance with one or more embodiments of the present invention; and
- FIG 10: is a representation of implementation of the system for a use-case of manufacturing another product along with a current product, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for managing a machinery-as-a-service contract involving multiple stakeholders are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

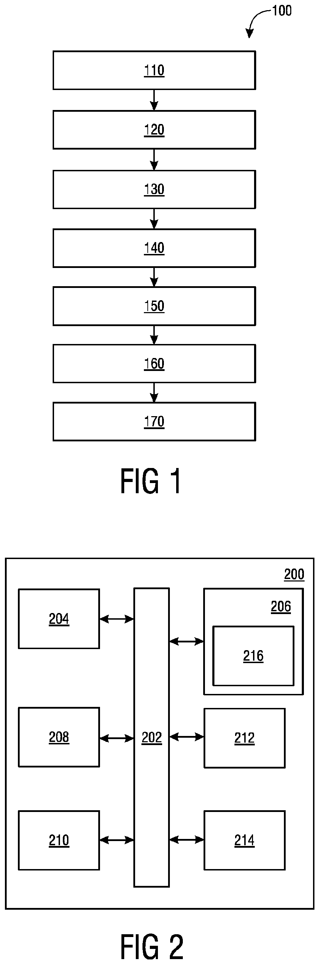

Referring now to FIG 1, illustrated is a flowchart of a method (as represented by reference numeral 100) for managing the product-as-a-service (PaaS) contract involving multiple stakeholders, in accordance with an embodiment of the present invention. As used herein, the PaaS contract within the multi-stakeholder environment represents a scenario which includes various parties who are actively engaged in the lifecycle of a product. In the present examples, where the product is a machinery, such contract is referred to as a machinery-as-a-service (MaaS) contract, with the two terms being interchangeably used hereinafter for purposes of the present invention. In the MaaS contract, the product is not merely sold as an item but is offered as a service with continual performance monitoring and regular updates. The multiple stakeholders may primarily include machinery provider(s) and machinery user(s), and may further include manufacturers, service providers, users, and other parties involved in the design, production, maintenance, and usage of the product. Each stakeholder typically has distinct roles and responsibilities, as well as unique requirements and expectations regarding the product.

In context of the present invention, "machinery" refers to complex systems, apparatus, or devices designed to perform specific tasks or achieve particular outcomes, primarily within industrial or manufacturing environments. These tasks can range from processing, fabricating, assembling to various other applications integral to production and operational processes. Herein, the machinery may encompass systems related to manufacturing equipment, including devices or systems used for producing goods, which may include machines for moulding, cutting, assembling, and other manufacturing processes; transportation systems, including machinery related to the movement or conveyance of goods or people, such as vehicles, conveyors, or lifts; energy systems, including devices or installations developed to generate, distribute, or manage energy, which may include generators, transformers, or renewable energy systems; healthcare equipment, including sophisticated apparatus or devices designed for medical procedures, diagnostics, or treatment, like medical imaging equipment or surgical robots; agricultural machinery, including systems or devices developed for farming or agricultural activities, such as tractors, harvesters, or irrigation systems; and the like.

In the MaaS model, machinery is not sold in the traditional sense; instead, it is provided as a service under a contractual agreement between the machinery provider and the user. The machinery provider retains ownership and is typically responsible for the maintenance, upgrades, and overall operational efficiency of the machinery, while the machinery user accesses and utilizes the machinery based on the terms of the service contract. Herein, the machinery providers own and offer machinery as a service to users under a contractual agreement. They are typically responsible for the maintenance, upgrades, and overall operational efficiency of the machinery. The machinery providers prioritize ensuring that the machinery performs optimally, aligning with the contractual agreements and user expectations. They focus on maintaining the machinery's operational efficiency and minimizing downtime to avoid service disruptions and contractual penalties. They may be concerned with the regular maintenance and timely upgrades of the machinery to prevent operational failures and to enhance the machinery's functionality and lifespan. On the other hand, the machinery users are entities that utilize the machinery under the terms of a service contract with the provider. They do not own the machinery but have access to it based on the contractual agreement, focusing primarily on the output and operational aspects of the machinery. The machinery users are fundamentally concerned with the quality of the products or services produced by the machinery. Any compromise on quality can impact their operational success and customer satisfaction. They expect the machinery to operate reliably without frequent breakdowns or disruptions, as any downtime can lead to operational delays, loss of productivity, and financial losses. They also seek to optimize the cost of using the machinery. They prefer transparent and value-based pricing models and expect the total cost of using the machinery to align with the value received.

Further, the other stakeholders, such as manufacturers are usually responsible for designing and producing the product, and may generally be concerned with ensuring that the product meets specific design criteria, quality standards, and production timelines. Manufacturers may also be interested in how the product performs in real-world usage scenarios to inform future product designs. Service providers, on the other hand, are typically tasked with maintaining the product, providing necessary services to keep the product functional, and offering additional services to enhance the product's value. These may range from routine maintenance and repairs to value-added services such as software updates, training, and customer support. Service providers may be interested in ensuring that the product operates efficiently and that any product issues may be promptly and effectively resolved. Users are the individuals or entities that use the product under the service contract. In addition to these stakeholders, there may be other parties involved in the MaaS contract, such as regulators, who set rules and standards that the product and the contract must comply with; financiers, who fund the product's development and service provision; and third-party vendors, who supply components or services needed for the product. Each of these stakeholders has its own interests and concerns related to the product and the contract.

Referring to FIG 2, illustrated is a block diagram of a system 200 for managing the MaaS contract involving multiple stakeholders, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for performing the said purpose. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processing unit 204 and a memory unit 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or nonvolatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display. It is to be understood that, when reference is made in the present invention to the term "display" this refers generically either to a display screen on its own or to the screen and an associated housing, drive circuitry and possibly a physical supporting structure, of which all, or part of is provided for displaying information.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for managing the MaaS contract involving multiple stakeholders. In particular, the memory unit 206 includes a set of modules 216 to perform steps for managing the MaaS contract involving multiple stakeholders. Also, in the system 200, the memory unit 206 may be configured to store the data associated with or generated by the execution of the inventive steps.

Referring to FIGS 1 and 2 in combination, the various steps of the method 100 as described hereinafter may be executed in the system 200, or specifically in the processing unit 204 of the system 200, for managing the MaaS contract involving multiple stakeholders. For purposes of the present invention, the present method 100 is embodied as a digital transformation algorithm for managing the MaaS contract involving multiple stakeholders. It may be appreciated that although the method 100 is illustrated and described as a sequence of steps, it may be contemplated that various embodiments of the method 100 may be performed in any order or a combination and need not include all of the illustrated steps. The method 100 has further been explained with an example use-case of managing a "Computer Numerical Control (CNC) Machine-as-a-Service" contract involving stakeholders including the machinery providers and the machinery users.

In particular, the interaction between the machinery providers and the machinery users is characterized by continuous communication and collaboration to align mutual expectations and requirements. The present method 100 and system 200 provides use of advanced mathematical models and dynamic business models which enable the precise simulation of machinery performance, allowing both parties to understand and agree upon the machinery's operational parameters, service levels, and pricing models. Continuous monitoring, performance assessments, and real-time adjustments to contractual terms facilitate a harmonious and productive relationship between providers and users, ensuring the fulfilment of both parties' needs and expectations in the evolving MaaS landscape.

In embodiments of the present invention, at step 110, the method 100 includes receiving, by the processing unit 204, requirements including one or more specific parameters from the machinery user(s) for a machinery. The processing unit 204 receives requirements from systems (like computing devices, not shown), via the input device 212, for example, of the multiple stakeholders for the machinery. These requirements encompass one or more specific parameters relevant to the machinery and its operation. The parameters may include, but are not limited to, physical properties of the machinery, functional properties, operational conditions, usage patterns, and lifecycle events of the machinery. The variety of these parameters ensures that a comprehensive set of requirements is collected, which forms the foundation for the subsequent stages of the method 100. By actively seeking this information from machinery user(s), the system 200 ensures a comprehensive understanding of the machinery and its context, enabling more accurate and reliable modelling and simulation. In the present example of "CNC Machine-as-a-Service" contract, the machinery user(s) may stipulate the need for a specific amount of production output, while the machinery provider(s) may provide details about the CNC machine's design and operating conditions.

At step 120, the method 100 includes orchestrating, by the processing unit 204, one or more mathematical models representative of the machinery to generate a plurality of derived one or more mathematical models based on the one or more specific parameters, wherein the one or more mathematical models are defined to model properties and behaviours of the machinery. This includes the intricate process of structuring and managing one or more mathematical models by the processing unit 204 to accurately represent the machinery in question. This orchestration involves the careful generation of a plurality of derived mathematical models, each meticulously constructed based on specific parameters that are inherent to the machinery. These specific parameters are elements, intricately defining and representing various aspects, properties, and behaviours of the machinery, ensuring that each derived model is a precise and accurate representation of the different possible states, conditions, and functionalities of the machinery. The mathematical models are defined to include the complex interplay of properties and behaviours of the machinery, providing a comprehensive and detailed representation that allows for in-depth analysis, simulation, and evaluation of the machinery's performance, capabilities, and operational efficiencies. This orchestrated array of mathematical models serves as a foundational framework, enabling a comprehensive exploration of the machinery's potential and limitations, and facilitating informed decision-making, optimizations, and enhancements in the Machinery-as-a-Service model.

Additionally, or alternatively, the method 100 may also include orchestrating a virtual twin (VT) representative of the machinery. A VT, also known as a digital twin, is a virtual representation that serves as the real-time digital counterpart of a physical object. The VT is a digital replica that models the properties and behaviours of the machinery (like the physical product or the service), thus offering a dynamic platform for simulating performance of the machinery in various scenarios. By creating the VT of the machinery, the method 100 enables a unique kind of simulation testing where response of the machinery to different requirements may be observed and evaluated. In the present example of "CNC Machine-as-a-Service" contract, the VT may model the physical properties and behaviours of the actual CNC machine, such as its tooling design, manufacturing capacity, and response to different material inputs and machining parameters.

In an embodiment, the step 120 of orchestrating the one or more mathematical models representative of the machinery comprises selecting, by the processing unit 204, the one or more mathematical models from a library of mathematical models based on the received requirements. This library serves as a repository, housing a diverse range of mathematical models, each designed to represent different types of machinery with varying properties and behaviours. The selection process is predominantly influenced by the specific requirements received, which may include needs, preferences, operational conditions, and performance expectations related to the machinery. Based on these received requirements, the processing unit 204 checks the library to identify and select those mathematical models that align most accurately and comprehensively with the defined needs and conditions. This ensures that the chosen models are the most representative and conducive for simulating, analysing, and evaluating the properties and behaviours of the machinery in question, thereby enabling more precise and informed assessments, adaptations, and optimizations in the context of the Machinery-as-a-Service model.

In other embodiments, orchestrating the VT representative of the machinery comprises selecting, by the processing unit 204, a VT from a library of VTs based on the received requirements. It may be understood that orchestrating the VT involves creating a digital replica that models the properties and behaviours of the machinery. To accomplish this, the processing unit 204 may select a suitable VT from a library of VTs based on the received requirements. The library may consist of pre-configured or pre-designed digital twins suitable for different types of products. Selecting the VT from the library may help save computational resources and time as compared to creating a new VT from scratch for every product. In such case, the method 100 further includes generating, by the processing unit 204, a plurality of derived VTs for the machinery based on the orchestrated VT. That is, once the VT is created, the processing unit 204 generates the plurality of derived VTs for the machinery based on the orchestrated VT. Each derived VT may be a version of the original VT, modified according to the received parameters. In other words, the derived VTs are variations of the original VT, each adjusted according to different parameters. This allows the evaluation of multiple usage scenarios based on the requirements received from the stakeholders. As the derived VTs simulate the performance of the machinery, a comprehensive understanding of expected behaviour of the machinery under varying conditions is achieved. In the present example of "CNC Machine-as-a-Service" contract, one derived virtual twin may simulate performance of the CNC machine under high load conditions, while another may simulate performance under low load conditions.

At step 130, the method 100 includes evaluating, by the processing unit 204, multiple usage scenarios of the machinery based on the received requirements, wherein each of the multiple scenarios is evaluated on each of the plurality of derived one or more mathematical models to simulate performance of the machinery. In the context of the MaaS contract, the ability to simulate and test different product behaviours in this manner allows stakeholders to anticipate possible issues or challenges and formulate solutions proactively. Moreover, the derived mathematical models enable the validation of the received requirements, thereby ensuring that they are viable, and that the machinery may meet these requirements. Thereby, this simulation testing enables the stakeholders to anticipate how the machinery would perform under various conditions and further allows for proactive problem-solving and solution design.

In the present example of "CNC Machine-as-a-Service" contract, the step 130 of evaluating multiple usage scenarios using the processing unit 204 involves implementing simulations that represent the CNC machine's functioning across different material conditions and operational settings. For this purpose, the derived mathematical models (or virtual twins) may represent the CNC machine operating under distinct conditions such as varying material hardness, changing cutting speeds, diverse feed rates, and different levels of coolant usage. Herein, the processing unit 204 may execute the simulations by modelling the CNC machine's responses to each scenario, anticipating performance metrics like production rate, efficiency, tool wear, and the potential need for maintenance. These simulations may involve computations to mimic the physical dynamics of material cutting, including chip formation, tool-material interaction, and the effect on final product quality. In some instances, the simulation process may also incorporate machine learning algorithms or other artificial intelligence techniques to generate predictive models of the machine's behaviour under each scenario. This evaluative process, thereby, aids the stakeholders in determining the CNC machine's performance before its actual deployment, enabling them to optimize the related machinery-as-a-service contract.

In an embodiment, the step 130 of evaluating multiple usage scenarios of the machinery based on the received requirements comprises implementing, by the processing unit 204, the plurality of derived one or more mathematical models to simulate expected performance of the machinery under the multiple usage scenarios. Such evaluation of multiple usage scenarios of the machinery is done using the derived mathematical models (and/or VTs) . Each usage scenario represents a possible situation in which the machinery may be used, and each derived mathematical model is tested under these scenarios. This evaluation allows the system to simulate and predict the machinery's performance under a wide array of conditions. It helps stakeholders understand how the machinery may behave in different situations and enables them to make informed decisions about the machinery's design, operation, maintenance, and end-of-life processes.

At step 140, the method 100 includes defining, by the processing unit 204, a set of Key Performance Indicators (KPIs) for monitoring performance of the machinery based on the evaluated multiple scenarios. The KPIs may be defined based on various factors such as the machinery's efficiency, durability, user-friendliness, reliability, and more. The KPIs are defined in such a way as to provide a clear, measurable, and objective assessment of performance of the machinery. In particular, the KPIs are derived from the evaluated usage scenarios and represent the most critical aspects of the machinery's performance. The KPIs may include indicators related to efficiency, reliability, durability, maintenance requirements, etc. of the machinery. The KPIs serve as benchmarks against which actual performance of the machinery may be compared, offering a clear and straightforward means of determining whether the machinery is meeting its expected performance standards. Thus, the KPIs offer a quantifiable measure of effectiveness that may be used to track and manage the performance over time. In the present example of "CNC Machine-as-a-Service" contract, the KPIs may include production efficiency, maintenance frequency, downtime, and operational lifespan of the CNC machine.

In an embodiment, the step 140 of defining the set of KPIs for monitoring performance of the machinery based on the evaluated multiple scenarios comprises, first, identifying, by the processing unit 204, specific parameters in the one or more mathematical models that are relevant to the received requirements, wherein the specific parameters comprise one or more of physical properties, functional properties, operational conditions, usage patterns, different configuration, retro-fittings, layouts and lifecycle events of the machinery. That is, the processing unit 204 methodically identifies specific parameters within the one or more mathematical models that have relevance to the requirements that have been received. These parameters encompass a comprehensive range of facets associated with the machinery. Further, the method 100 includes varying, by the processing unit 204, the identified specific parameters within predetermined ranges based on the received requirements to compute values of the set of KPIs. That is, following the identification of these specific parameters, the processing unit 204 proceeds to systematically vary these parameters within predetermined ranges. This variation is conducted in strict accordance with the requirements that have been received. By doing so, the processing unit 204 computes values for the set of KPIs. These KPIs serve as quantitative metrics and indicators that gauge and quantify the machinery's performance under different scenarios and conditions. The computed KPI values provide insights into how the machinery is expected to function, excel, or adapt based on the varying parameters, enabling a comprehensive assessment of its performance in diverse operational contexts.

In the present embodiments, the physical properties may pertain to tangible characteristics such as size, weight, dimensions, materials, and structural attributes of the machinery; the functional properties may include the machinery's capabilities, functionalities, and the range of tasks or operations it can perform; the operational conditions may involve the various states and conditions under which the machinery can operate efficiently, encompassing factors like temperature, humidity, and pressure; the usage patterns may pertain to the typical or expected usage scenarios, including frequency, duration, and intensity of operation; the configuration may include machinery's arrangement and setup, and can include different components, subsystems, and their interconnections; the retro-fittings may refer to any modifications or upgrades made to the machinery to enhance its capabilities or adapt it to changing requirements; the layouts may include the spatial arrangement of machinery components within the operational environment; and the lifecycle events may include events and milestones associated with the machinery's lifecycle, such as maintenance schedules, component replacements, and end-of-life considerations.

At step 150, the method 100 includes monitoring, by the processing unit 204, operational data associated with usage of the machinery. Monitoring the operational data associated with usage of the machinery is a continuous process that involves gathering data from various sources. In other words, this monitoring is carried out continuously during the course of the MaaS contract. This continuous monitoring enables the real-time evaluation of the machinery's performance, which is a significant advantage in a MaaS contract. The significance of this real-time assessment lies in its capacity to capture and alert the stakeholders to any deviations or anomalies in the machinery's performance as and when they occur, instead of at pre-determined intervals. This enables proactive adjustments, if necessary, to either the machinery's operations or the terms of the MaaS contract itself, thereby ensuring the effectiveness of the service delivery and the satisfaction of the stakeholders involved. In the present example of "CNC Machine-as-a-Service" contract, the step 150 may involve gathering data from embedded sensors in the CNC machine, usage logs, and feedback from users.

In an embodiment, the step 150 of monitoring the operational data associated with usage of the machinery comprises gathering, by the processing unit 204, data related to the performance of the machinery from one or more of: sensors embedded in the machinery, usage logs, and feedback from the users. That is, the processing unit 204 is configured to gather data that is pertinent to the machinery's performance. The sources of such data may be diverse and may encompass sensors that are embedded within the machinery, usage logs that record the machinery's operational history, and feedback that is directly procured from the machinery's users. These sources provide a comprehensive dataset that accurately reflects the machinery's functioning and effectiveness under different conditions and usage scenarios, thereby supporting the real-time performance evaluation for the successful management of the machinery-as-a-service contract.

At step 160, the method 100 includes comparing, by the processing unit 204, the monitored operational data against the defined set of KPIs to assess the performance of the machinery. That is, he monitored operational data (from the step 150) is compared against the defined set of KPIs to assess the machinery's performance. The objective of this comparison is to determine whether the machinery meets, exceeds, or falls short of the set expectations. The results of this assessment help in understanding whether the machinery is meeting its expected performance levels, identify any areas of improvement, and guide decision-making processes related to the machinery and its associated services. Specifically, the results of this assessment may be utilized in making informed decisions about the machinery and its related services. If the machinery's actual performance matches or exceeds the defined KPIs, it is considered to be performing optimally. If the performance falls short of the KPIs, the system 200 identifies this as an area for improvement. This comparison allows for an ongoing evaluation of performance of the machinery, ensuring that any issues are promptly identified and addressed. In the present example of "CNC Machine-as-a-Service" contract, the comparison enables the processing unit 204 to assess the real-world performance of the CNC machine and identify any discrepancies between the predicted and actual performance.

It may be appreciated by a person skilled in the art that the comparison may involve a range of different techniques depending on the specific KPIs being used in the context of "CNC Machine-as-a-Service" contract. In general, the comparison may often involve some form of statistical analysis or pattern recognition. For instance, for numerical KPIs, such as production efficiency or operational lifespan, the comparison may involve checking whether the actual values are greater than, equal to, or less than the predicted values. For instance, if the KPI for production efficiency is 90%, and the actual efficiency is 92%, the processing unit 204 may determine that the actual efficiency surpasses the predicted efficiency. For categorical KPIs, or KPIs that involve more complex data, the comparison may involve pattern recognition or machine learning algorithms. For instance, if the KPI is related to patterns in the usage logs (such as a specific sequence of operations being followed), the processing unit 204 may use sequence mining or other pattern recognition techniques to compare the actual usage logs against the expected patterns in the present example of CNC machine operations.

At step 170, the method 100 includes generating, by the processing unit 204, one or more business models for the machinery provider(s) and the machinery user(s) based on the assessment of the performance of the machinery. That is, upon assessing the performance of the machinery, the processing unit 204 takes the data and insights gathered from the evaluation of the machinery's performance and utilizes this valuable information as the foundation for creating one or more business models. These business models are strategic frameworks and plans that delineate how the machinery provider(s) and the machinery user(s) will engage in the MaaS model, with a primary focus on optimizing their respective objectives and requirements. The business models generated for both machinery provider(s) and machinery user(s) are intricately aligned with the findings and insights derived from the assessment of machinery performance. This alignment ensures that the business models are data-driven, responsive to real-world performance outcomes, and capable of addressing any gaps or areas for improvement identified during the evaluation. The generated one or more business models may be displayed on the output device 214, such as a display, like a computer monitor, a tablet screen, a smartphone display, etc.

These dynamic business models are not static but evolve over time as new data and assessments become available. They serve as dynamic roadmaps that guide the ongoing relationship between the machinery providers and the machinery users within the MaaS model, facilitating continuous improvement, adaptation, and optimization to ensure that both parties achieve their objectives and derive maximum value from their participation in the model. Herein, for machinery provider(s), the generated business model may include strategies and considerations tailored to their role. This may include: pricing strategies including determining the pricing structures that will ensure profitability while remaining competitive and attractive to users; maintenance and upgrade plans including outlining schedules and procedures for regular maintenance, upgrades, and retro-fitting of the machinery; performance optimization including strategies for continually enhancing machinery performance, reducing downtime, and minimizing operational disruptions; sustainability initiatives including identifying steps and practices that align with sustainability goals, such as energy efficiency and waste reduction; revenue forecasting including projections of revenue streams based on the performance assessment, pricing, and contractual terms; and the like. On the other hand, for machinery user(s), the generated business model is tailored to meet their specific operational requirements and objectives. This may include: utilization strategies including defining how the machinery will be utilized within their operational processes, including usage patterns, workflows, and integration with existing systems; cost optimization including strategies to manage and optimize costs associated with machinery usage, ensuring efficiency and cost-effectiveness; contractual flexibility including approaches to adapt to changing operational needs and market conditions while adhering to contractual agreements; quality assurance including ensuring that the machinery aligns with quality standards and meets production or service delivery requirements; user experience enhancement including strategies to enhance the user experience, usability, and ease of machinery operation; and the like.

In some embodiments, based on the assessment of the machinery's performance, the processing unit 204 generates a notification. This notification is a detailed representation of the evaluation of performance of the machinery. The notification is based on the comparison of the operational data with the defined KPIs and provides a clear and concise summary of the machinery's performance. The notification may include details about the performance of the machinery for each KPI, potential issues identified, and any recommended actions. The notification is designed to be easily understandable by all stakeholders, providing them with the information they need to make informed decisions about the machinery. In the present example of "CNC Machine-as-a-Service" contract, the notification may be in the form of a report or an alert that is sent to the stakeholders, providing them with detailed insights into the CNC machine's performance and any necessary actions or adjustments.

In an embodiment, the step 170 of generating the one or more business models based on the assessment of the performance of the machinery comprises generating, by the processing unit, a digital contract of a dynamic business model with respective terms and conditions for each of the one or more business models. That is, upon assessing the performance of the machinery, the processing unit 204 is configured to generate digital contracts that includes the dynamic business models. The digital contract serves as a legally binding document between the stakeholders and lays out the terms of the MaaS agreement. Thereby, the digital contract serves as a formal agreement between the service provider and the user, outlining their respective responsibilities and expectations. By basing the digital contract on the defined KPIs, the agreement becomes a reflection of the expected performance of the machinery, ensuring a clear and objective basis for the contract's terms. These digital contracts are not static agreements but are adaptive and responsive to changing conditions, aligning with the requirements and objectives of each business model for both machinery providers and machinery users. This adaptability ensures that the business models remain relevant, effective, and capable of delivering value to all stakeholders involved in the MaaS model. One feature of these digital contracts is the integration of real-time monitoring and adaptation mechanisms. As the machinery operates and performance data is continually collected, the digital contracts autonomously adjust parameters, terms, and conditions to optimize machinery utilization, cost-efficiency, and overall performance.

In an example, generating the one or more business models may involve comparing the monitored operational data against the benchmark or target values defined by each KPI. For example, if one KPI is to measure the uptime of the machinery, the processing unit 204 compares the actual uptime recorded in the operational data against the target uptime defined by the KPI. This comparison provides a measure of the machinery's performance for that KPI, indicating whether it meets, exceeds, or falls short of the defined expectations. This may further include applying, by the processing unit 204, a predefined calculation for each individual KPI to compute a charge value based on the determined performance. That is, following the determination of performance for each KPI, the processing unit 204 applies the predefined calculation for each individual KPI to compute a charge value based on the determined performance. This predefined calculation may be designed in various ways depending on the contract terms and stakeholder preferences. For example, the predefined calculation may be set to compute higher charge values when the machinery's performance exceeds the KPI targets, rewarding the manufacturer or service provider for excellent performance. Alternatively, the predefined calculation may be designed to compute lower charge values when the machinery's performance falls short of the KPI targets, providing a form of compensation to the users. Finally, this may include aggregating, by the processing unit 204, the computed charge values in the form of an invoice, including a breakdown of charges, for the MaaS contract. That is, after applying these calculations to all the KPIs, the processing unit 204 ends up with the set of computed charge values that correlate the machinery's performance in different aspects with monetary values. The processing unit 204 may achieve this by producing the invoice that includes a breakdown of charges for the MaaS contract. Each item in the breakdown corresponds to a KPI, and the charge value for each item reflects the machinery's performance for that KPI as computed by the processing unit 204. This breakdown of charges offers transparency and clarity about the MaaS contract to the stakeholders.

In an embodiment, the terms and conditions comprise one or more of operational parameters, efficiency, lifespan, service levels, pricing, and penalties for non-compliance, related to the machinery based on the defined set of KPIs. Operational parameters are defined, specifying the conditions under which the machinery should operate efficiently. This includes factors like environmental considerations and usage patterns, including limits or ranges for various operational values. Efficiency-related terms ensure optimal resource usage and energy efficiency, benefiting both providers and users. The machinery's lifespan is addressed with maintenance schedules and strategies for component replacement or upgrades. Service levels are agreed upon, detailing response times, availability guarantees, and quality metrics to minimize downtime. Transparent pricing structures are established, potentially based on usage or performance, along with mechanisms for revenue-sharing. Penalties for non-compliance are defined to encourage adherence to the contractual terms and maintain accountability. These terms and conditions form a robust contractual framework that aligns interests and encourages transparency, accountability, and collaboration between machinery providers and users. It also allows for continuous improvement based on real-world data and evolving operational needs.

In an embodiment, the method 100 further includes automatically adapting, by the processing unit 204, the terms and conditions of the digital contract based on the assessment of the performance of the machinery. This adaptive capability ensures that the contractual framework remains aligned with the real-world operational dynamics of the machinery. Herein, as the machinery operates and performance data is continuously collected and analyzed, the processing unit autonomously evaluates whether the predefined terms and conditions are still optimal and relevant. If variations in performance or other operational factors are detected, the processing unit can dynamically modify the contract terms to better suit the evolving conditions. For instance, if the machinery's efficiency surpasses expectations, the contract may be adjusted to reflect performance-based incentives or pricing reductions. Conversely, if the machinery encounters issues or falls short of agreed-upon standards, the contract can adapt to include corrective actions, performance improvement targets, or adjustments in pricing to address the non-compliance. This automated adaptation mechanism ensures that the digital contract remains a responsive and effective tool for both the machinery providers and the machinery users.

In an embodiment, the method 100 further includes notifying, by the processing unit 204, the machinery provider(s) and the machinery user(s) regarding the automated adaptations made to the terms and conditions of the digital contract. This mechanism informs both the machinery provider(s) and user(s) of the changes made to the contract. For this purpose, the processing unit 204 continuously monitors the machinery's performance and compares it against the predefined KPIs and contract terms. When the processing unit 204 detects changes in performance, efficiency, or other relevant factors, it triggers the adaptation process. Upon making adaptations to the contract, the processing unit 204 generates notification(s) to inform both the machinery provider(s) and user(s) of the modifications. The notifications provide details about the nature of the adaptations, including any changes to pricing, service levels, performance metrics, or other relevant terms and conditions.

In an embodiment, the method 100 further includes alerting, by the processing unit 204, the machinery provider(s) and the machinery user(s) when the performance of the machinery continuously does not meet the defined set of KPIs for a predetermined period. Herein, the processing unit 204 monitors the performance of the machinery against the defined set of KPIs. If the machinery's performance does not meet the defined set of KPIs continuously for the predetermined period, the processing unit 204 takes the initiative to alert the machinery provider(s) and the machinery user(s) of this discrepancy. This immediate communication allows the machinery provider(s) and user(s) to quickly understand the performance deficits and to collaboratively engage to resolve the issues, whether it requires adjustments, maintenance, or other corrective actions, ensuring the machinery's optimal functionality is restored and maintained.

Moreover, the method 100 also includes creating, by the processing unit 204, a knowledge graph (KG). The KG is a semantic tool that presents the relationships between the defined set of KPIs and the corresponding monitored operational data. This KG offers a visual representation of the data and the interconnections between different elements, providing valuable insights into the machinery's performance. This is done by collecting data from the defined set of KPIs and the corresponding monitored operational data. The collected data is processed to identify relationships between the KPIs and the operational data. These relationships may include correlations, dependencies, trends, patterns, or anomalies. Semantic tags are assigned to the KPIs and the operational data based on these relationships. Nodes are then constructed for the semantically tagged KPIs and the operational data, and these nodes are linked based on the identified relationships to create a network. This network of interconnected nodes represents the semantic relationships between the KPIs and the operational data, thus creating the KG.

In some embodiments, the method 100 further includes updating, by the processing unit 204, the KG in near real-time as new operational data is monitored and/or as the KPIs are updated based on the assessment. That is, the KG is updated in near real-time as new operational data is monitored and/or as the KPIs are updated based on the assessment. It may be appreciated that such new operational data may be collected from a variety of sources such as embedded sensors in the machinery, usage logs, feedback from users, and more. This new data may include information about the machinery's physical and functional properties, usage patterns, lifecycle events, and operational conditions. The nature, quantity, and frequency of the said new data may vary, depending on the machinery, its use, and the stakeholders' requirements. At the same time, the processing unit 204 may update the KPIs based on the assessment of performance of the machinery. These updates may involve adding new KPIs, removing outdated or irrelevant KPIs, or adjusting the target values or calculation formulas of existing KPIs. This continuous updating of the KG ensures that it always reflects the most current information.

In some embodiments, the method 100 further includes utilizing, by the processing unit 204, the KG to determine decisions related to the MaaS contract. It may be understood that the semantic relationships represented in the KG provide an enriched context, enabling the processing unit 204 to identify subtle correlations, hidden patterns, and potential outliers that may influence performance of the machinery. This contextual understanding helps the processing unit 204 in making informed decisions related to the MaaS contract. The KG may be utilized to make decisions related to the MaaS contract. The decisions include one or more of defining or adjusting the one or more specific parameters, and comparing the monitored operational data against the defined set of KPIs. For example, if the KG reveals a correlation between a specific operational parameter and a decrease in machinery efficiency, the processing unit 204 may decide to adjust this parameter to optimize performance. These adjustments are carefully calibrated based on the insights provided by the knowledge graph, ensuring that the modifications are aligned with the overall objectives and requirements of the MaaS contract. Further, the said comparison allows the processing unit 204 to assess whether the machinery is operating within the agreed-upon parameters and meeting the expected performance standards. If discrepancies are identified, the KG aids in understanding the underlying causes and determining the appropriate corrective actions or adjustments.

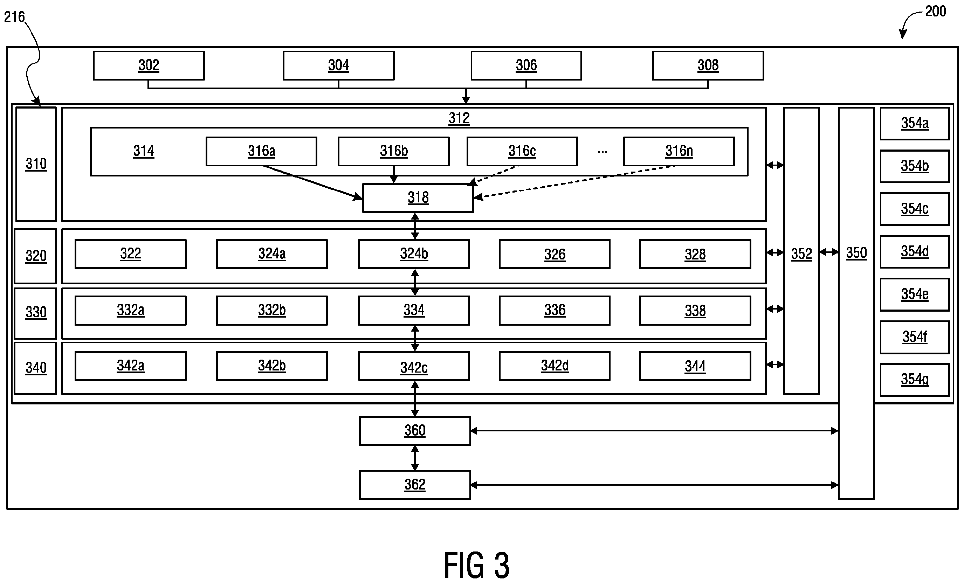

Referring to FIG 3, illustrated is a schematic diagram representation of an overall architecture of the system 200 for managing the MaaS contract involving multiple stakeholders, in accordance with one or more embodiments of the present invention. As shown, herein, the stakeholders include machinery provider(s) 302 (such as, an Original Equipment Manufacturer (OEM) or a manufacturer), machinery user(s) 304 (such as, a customer). In some examples, the stakeholders may also include a finance service provider 306, an insurance provider 308, and the like. Each of the stakeholder 302-308 is configured with respective stakeholder system which provides one or more user interfaces for receiving the requirements and for presenting the generated notification to the corresponding stakeholder. These user interfaces may be designed for simplicity and ease of use, thus enhancing stakeholder engagement and satisfaction.

Further, as shown, the system 200 is configured with the set of modules 216 including several modules. Each module is designed for a specific function in the management of the MaaS contract. In particular, as shown, the set of modules 216 includes multiple modules (or layers) including an orchestration module 310, a maintenance module 320, a legal module 330, an application module 340. Such modular structure of the system 200 enhances its efficiency and reliability, ensuring that each function is performed optimally.

The orchestration module 310 operates within the system 200 to develop a mathematical model representation of the machinery. The orchestration module 310 integrates with a marketplace 312, which may be in the form of a library of mathematical models 314 that stores a vast array of master mathematical models (or VTs) (as represented by reference numerals 316a-316n). Each master mathematical model covers the specific traits, behaviours, and performance parameters of a distinct product or service. For example, considering a product such as motor, the master mathematical models 316a-316n serve as detailed digital replicas of the motor, each reflecting different configurations, operational conditions, or specifications. These models may encompass diverse aspects of the motor's functionality, structure, and operational dynamics, such as rotational speed, torque, efficiency, and power consumption, among others. They might also represent different variants of the motor, each with distinct features, capabilities, and performance attributes, enabling a wide range of simulations and analyses to assess the motor's behaviour under various scenarios.

The orchestration module 310, by leveraging these intricate models from the library 314, enables the system 200 to simulate and evaluate the machinery's performance, adaptability, and efficiency under multiple conditions and requirements. This integration facilitates a more dynamic and responsive approach to managing machinery in the MaaS model, allowing for precise adjustments, real-time monitoring, and continuous optimization based on the insights derived from the orchestrated mathematical model representations. Thus, the orchestration module 310 plays a pivotal role in enhancing the versatility, reliability, and efficacy of machinery management within the evolving landscape of service-oriented business models.

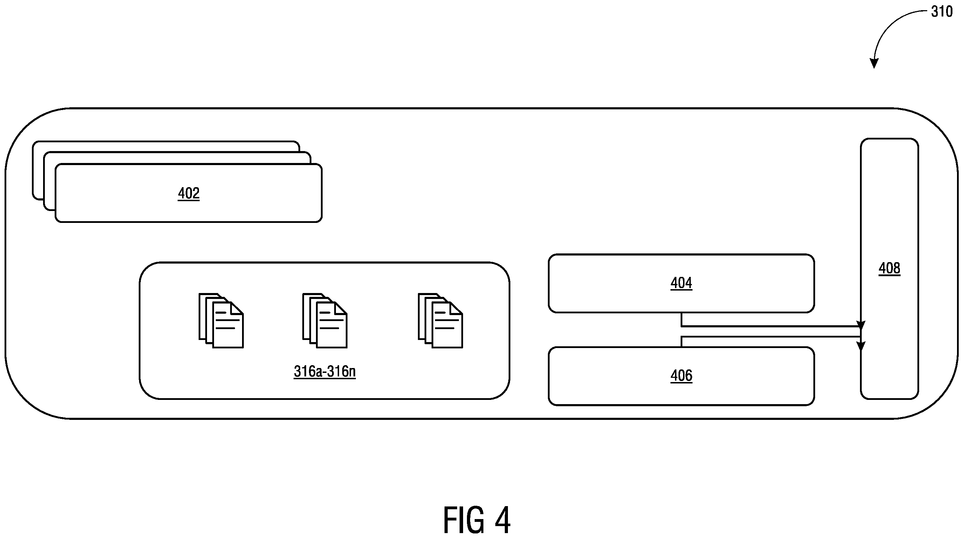

FIG 4 is a detailed view of the orchestration module 310, according to one embodiment of the invention. The orchestration module 310 of the system 200 is configured to facilitate the generation, handling, and management of master mathematical models 316a-316n for the machinery involved in the MaaS contract. Accompanying the mathematical models 316a-316n is a collection of related documentation 402 stored in a cloud storage platform. The documentation 402 includes details related to the machinery and findings from the mathematical model simulations, such as parameters, instructions, past findings, and related PDFs. Further, the orchestration module 310 includes an orchestration manager 404 which interfaces with the user to help select and manage application-specific mathematical models, leveraging a mathematical model for simulating various scenarios at the system level or more detailed simulations as needed. The orchestration module 310 also includes a changes and parameter tweak handler 406 responsible for managing these adjustments to the mathematical models 316a-316n. The handler 406 allows users to specify important parameters for the virtual operation of the machinery and uses this input to produce the derived mathematical models 318 (as shown in FIG 3). The handler 406 also integrates changes that occur to the machinery in the real world, such as wear and tear, into the derived mathematical model 318. Further, a virtual layer 410 takes the information regarding the mathematical models 316a-316n, integrates the constraints and changes provided by the user or identified from real-world assessments of the machinery, and produces derived mathematical model 318. This virtual layer 410 is thus responsible for providing an updated, accurate mathematical model that reflects the current state of the machinery and any adjustments needed for the particular application.

Referring back to FIG 3, the maintenance module 320 (also sometimes referred to as "service module" or "service layer") aims to provide the stakeholders 302-308 with information for any maintenance-related issue. The maintenance module 320 consists of application specific service instructions which user may query appropriately based on the application. For example, the query for the users of a pumping system would be different for Food and Beverage versus an Oil and Gas industry, in which the former needs to have systems made of a food-safe internal lining which is not the case for the later. As shown, the maintenance module 320 provides an array of guidelines and instructions related to product maintenance. This array encompasses a range of components such as application-specific service instructions (as represented by reference numeral 322), guidelines for operators (as represented by reference numeral 324a), and troubleshooting guidelines derived from error codes (as represented by reference numeral 324b). The maintenance module 320 also includes immersive instructions (as represented by reference numeral 326), which may be delivered in several formats, including augmented reality (AR) or virtual reality (VR), to guide users or operators in performing maintenance tasks effectively. Moreover, the maintenance module 320 may also include guidelines for supply chain management (as represented by reference numeral 328) to facilitate the continued operation and resource availability for product maintenance.

The legal module 330 handles the contractual and risk-associated aspects related to the MaaS contract. The legal module 330 is involved in risk quantification (as represented by reference numeral 332a), providing stakeholders with an understanding of potential risks associated with the machinery, service, and the contract. The legal module 330 also contributes to defining risk sharing agreements (as represented by reference numeral 332b) among stakeholders. In addition, the legal module 330 oversees compliance to the contract's terms and conditions (as represented by reference numeral 334). The legal module 330 also aids in determining profit or loss sharing terms (as represented by reference numeral 336) when the contract results in financial implications. The legal module 330 may also be equipped for conflict management (as represented by reference numeral 338), should disagreements arise among stakeholders.

The application module 340 is structured to provide User Interfaces (UIs) that cater to the specific needs of various stakeholders such as OEM specific UI 342a, finance service provider specific UI 342b, end customer specific UI 342c, and insurance provider specific UI 342d. Each UI is designed to present relevant information in a format that is appropriate to the role and requirements of the respective stakeholder, thereby ensuring effective interaction with the system 200. The UIs 342a-342d may be provided be either through a webpage or a chatbot based application. The application module 340 may also incorporate cybersecurity-enabled features 344 to safeguard data of the stakeholders against potential cybersecurity threats.

Further, as shown in FIG 3, the system 200 may include a semantic infrastructure layer 350 responsible for handling the integration of the operational data from various data sources and creating a unified, semantically rich representation of the data in the form of a KG. The semantic infrastructure layer 350 uses a data integration handler 352 which interfaces with multiple external data sources, potentially including IoT devices on the machinery, external databases, and other data repositories. The handler 352 collects the operational data regarding the machinery's performance, conditions, and other relevant factors. Further inputs to the semantic infrastructure layer 350 include expert knowledge 354a which refers to valuable insights, advice, or specialized information from individuals with extensive and specialized experience related to the machinery; literature information 354b which encompasses information from academic or industrial literature relevant to the machinery, its operation, and its performance; technical documents 354c such as product specifications, design details, and manufacturing processes; available contracts 354d including conditions, terms, and KPIs, may offer reference points for creating and managing new MaaS contracts; guidebooks 354e including best practices, instructions, and troubleshooting steps; service reports 354f including historical data related to previous maintenance or repair activities; and any other information 354g such as user reviews, industry trends, or regulatory compliance data and the like. The output from the semantic infrastructure layer 350 is in the form of a knowledge graph 360 and a digital contract 362. The knowledge graph 360 provides rich data for interpreting and utilizing it to establish a comprehensive understanding of the machinery's life cycle, operational parameters, and the associated costs. The digital contract 362, on the other hand, leverages the depth of data to delineate clear terms and conditions for the machinery's use. The digital contract 362 also outlines performance metrics, efficiency targets, service level agreements, pricing models, and potential penalties for non-compliance. These contracts are dynamic, allowing adjustments based on real-time performance assessments of the machinery.

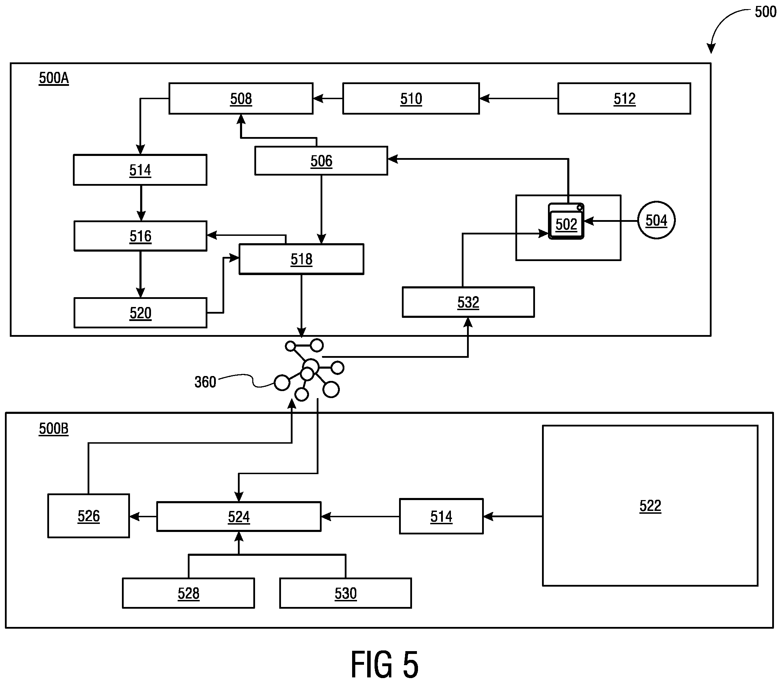

FIG 5 is a schematic of a process flow (as represented by reference numeral 500) for managing the machinery-as-a-service contract involving multiple stakeholders, in accordance with one or more embodiments of the present invention. This process flow 500 provides a framework designed to facilitate dynamic business models suitable for implementing Machinery-as-a-Service contracts, catering to both Greenfield and Brownfield applications. The process flow 500 allows for evaluating scenario-related value 500A and business-related value 500B throughout the diverse stages of a business model. Herein, the scenario-related value 500A is focused on the intrinsic and operational aspects of the machinery and how it aligns with the various requirements and preferences of the stakeholders, whereas the business-related value 500B is primarily concerned with the financial and contractual aspects of the machinery-as-a-service model, focusing on the expenses incurred by stakeholders based on their chosen business models.

The process flow 500 begins at an application layer 502, where the requirements and specific parameters from machinery users are received by the processing unit 204. The application layer 502 serves as the interface for users 504 (like the machinery users), allowing them to communicate their needs and preferences related to the machinery. Once the user requirements are obtained, a graphical structure extraction module 506 extracts the semantics from these requirements and converts them into a semantic network. This transformation forms the basis for orchestrating relevant mathematical models, facilitating the creation of structured graphical representations of user inputs. An orchestration manager 508 (such as, the orchestration module 310) then orchestrates relevant mathematical models based on the graphical structure developed. The orchestration manager 508 uses multiple mathematical models from a library/marketplace 510 (like the library 314), connected to a web server 512, to generate derived mathematical models 514 providing a configurable approach to model the properties and behaviours of the machinery.

The derived mathematical models 514 are utilized by a scenario evaluation module 516 to assess multiple usage scenarios of the machinery based on received requirements. This evaluation helps in simulating the performance of the machinery under different conditions and configurations, allowing for a detailed examination of various usage scenarios. Herein, a recommendation system 518 generates and passes multiple different configurations or value propositions to the scenario evaluation module 516 based on user's queries. Also, a simulation runner module 520 performs value evaluations by implementing simulations, which are based on different scenarios, providing insights into the effects of different configurations and contributing to the process of value capturing. Post scenario evaluation, the recommendation system 520 also ranks and stores the different proposed values in a knowledge graph (such as, the knowledge graph 360), enabling the creation of optimized and user-centric value propositions.

Further, in the process flow 500, captured data from real system or virtual system 522 is fed to the derived mathematical model 514, which extracts KPIs from the data received from the real system or the virtual system, creating a linkage between operational data and contractual elements. A contract handler module 524 uses the extracted KPIs and integrates contract-related details from the knowledge graph 360, and financing-related details from a finance handler module 528 and/or insurance-related details from an insurance claim handler module 530, to determine relevant terms and conditions. Subsequently, a value evaluation module 526 calculates the overall expenses based on received details, offering a comprehensive view of the financial aspects of the chosen business model.

Furthermore, the calculated overall expenses and other generated knowledge are stored in the knowledge graph 360, providing a centralized repository for insights and data generated throughout the process. This ensures that all the relevant information is available for future reference and utilization. A visualizer and data plotter module 532 may be utilized to visualize the knowledge stored in the knowledge graph 360, by plotting and presenting the data in a manner that allows stakeholders to visualize the results effectively, aiding in decision-making processes. Based on the assessment of the machinery's performance and the calculated overall expenses, one or more dynamic business models are generated for the machinery provider(s) and the machinery user(s) (as discussed above in the description). These dynamic business models represent the culmination of the process, offering optimized and tailored solutions that align with user requirements and machinery performance.

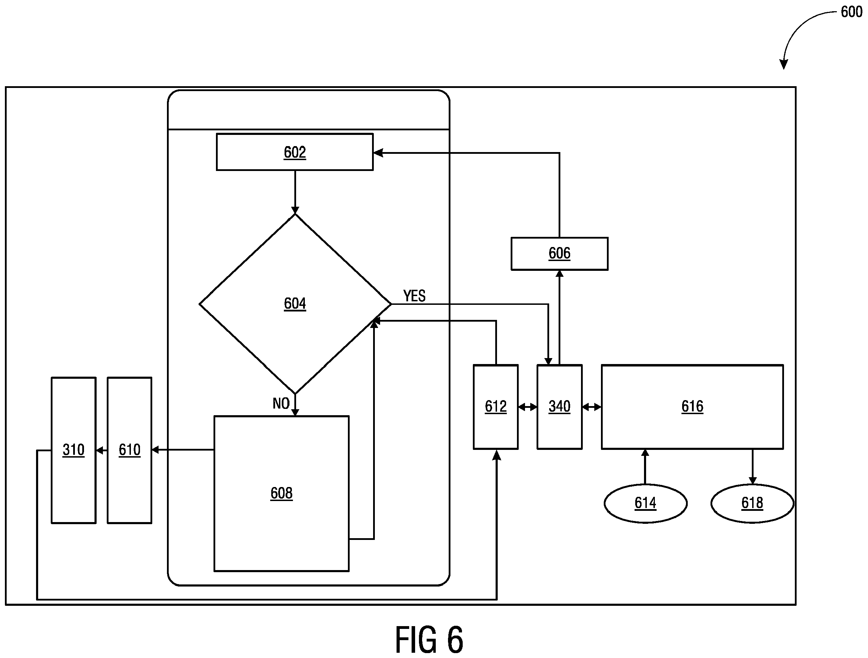

Referring to FIG 6, illustrated is a flowchart 600 for handling queries from stakeholders using the semantic infrastructure layer 350 (as discussed in reference to FIG 3). The flowchart 600 starts at block 602 with receiving requirements, as a query, including one or more specific parameters from the multiple stakeholders for the machinery. At block 604, the semantic infrastructure layer 350 may search the KG based on keywords from the query. If the solution to such a query exists, then the information will be provided from the KG to the application module 340 (as shown). Herein, the application module 340 may further fetch the query post filtering and pre-processing as in block 606. Otherwise, at block 608, the user will be directed to the orchestration module 310 by first converting the query to inputs for the orchestration module 310 via a Natural Language Processing (NLP) engine 610, using which orchestration of master mathematical models is done and derived mathematical model is created. Further, the user questions and requirements are linked and stored in the form of a KG in a service layer 612 to resolve any similar query in the future. Th user may use this context for starting (as in block 614) an interaction process 616 for getting responses, and then end (as in block 618) the interaction when satisfied.

As it is difficult for a stakeholder to decide which option would be right one to choose or offer for example: should I go for convention leasing or product bundling or a combination? The requirements of the end customer may be various for example: 100% uptime, energy efficiency, product quality, process efficiency or combination of these. The proposed framework by orchestrating the required mathematical model models may help in simulating different combinations of the requirements and scenarios, and may be used to answer these questions by leveraging a layered architecture which consists of the set of modules 216 interacting with the semantic infrastructure layer 350.

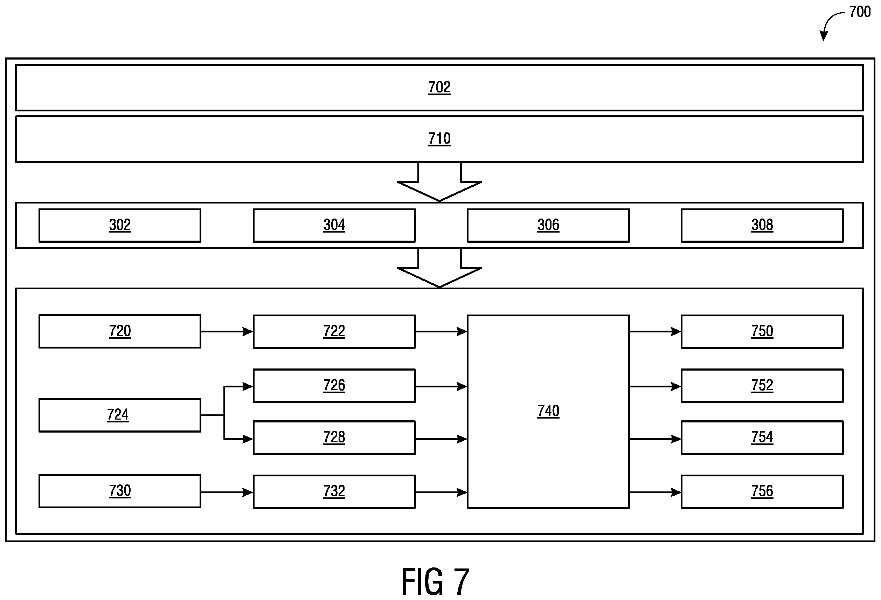

Referring to FIG 7, illustrated is a schematic diagram representation of a workflow (as represented by reference numeral 700) for managing the MaaS contract involving multiple stakeholders 302-308, in accordance with one or more embodiments of the present invention. The workflow 700 uses orchestrated mathematical model and KG to help the stakeholders 302-308 during the different stages of MaaS. During the initial decision making, the requirements from the stakeholders 302-308 may be collected and different scenarios are evaluated and the outcome of which may be used to decide the optimal business model. And during operation, the field or test data may be utilized to generate dynamic business models by monitoring the KPIs for verification of terms and conditions of the contract. If the end customer comes up with any additional requirements during operation, this framework helps to dynamically frame such a contract. The learnings are captured using the KG which may be reused for any similar contract in future or for any contract in an intelligent way. In particular, herein, the workflow 700 has been shown to be implemented for a market 702 with certain applications, such as greenfield and brownfield applications 710. In the case of greenfield applications, where a completely new product is being developed, the stakeholders 302-308 have the flexibility to define the initial requirements from scratch, based on market needs and technological possibilities. In brownfield applications, where an existing product is being upgraded or modified, the stakeholders 302-308 need to take into account the existing specifications, performance, and issues of the machinery.

In the workflow 700, the process begins framing initial decisions 720 with the gathering of requirements 722 from the stakeholders 302-308. For example, the machinery user 304 may have the requirements 722 regarding the production performance of the machinery. These requirements are usually static, defined at the start of the process, and may be based on their expertise and experience in manufacturing similar products. On the other hand, other stakeholders may provide inputs during operation 724 including baseline requirements 726 and dynamically changing requirements 728. For example, the finance service provider 306 may have the baseline requirements 726 related to the financial aspects of the MaaS contract. These may include the pricing of the machinery, the terms of payment, the return on investment, and the risks associated with the contract. Further, the end customer 306 may have the dynamically changing requirements 728 derived from the customer's specific needs, preferences, usage patterns, and feedback, and be influenced by the customer's experience with the machinery, changes in their needs or circumstances, and their satisfaction with the machinery and the service provided. These dynamically changing requirements 728 may change based on various factors such as changes in working conditions of the machinery, performance of the machinery, etc. The workflow 700 may also provide conditions for end of contract 730 which may include historic data 732, including records of the machinery's performance, the customer's usage patterns, the effectiveness of the service provided, and the outcomes of previous contracts. By analysing the historic data 732, insights may be derived that may inform the management of the current contract and the development of future contracts.

Further, once the requirements have been gathered, the next step in the workflow 700 is orchestration of a mathematical model of the machinery (as represented by reference numeral 740). The mathematical model is used to simulate performance of the machinery under various usage scenarios, based on the stakeholders' requirements. This simulation may provide valuable insights into the potential outcomes of the MaaS contract, helping to define the contract terms and conditions, set the key performance indicators (KPIs), and anticipate possible issues or changes. In this step, a KG is also created to represent the relationships between the various elements of the process, such as the stakeholders' requirements, the mathematical model, the contract terms and conditions, and the actual performance data of the machinery. The KG may be used to analyse these relationships, identify patterns and trends, and make informed decisions about the management of the MaaS contract.

Consider a scenario of a factory manager who operates within a dynamic production environment. One of the base operational requirements is to pump 500 litres of fluid per minute. However, the needs of the factory may fluctuate, especially during peak production periods when the pumping requirement may exceed the base level. The challenge for the factory manager is to identify a business model and contract that offers the required flexibility and adaptability to meet these varying requirements. From the viewpoint of the Original Equipment Manufacturer (OEM) providing the pumping service, the task lies in creating a business model that aligns with the customer's fluctuating needs while ensuring profitability for both parties. The questions that arise from such a scenario may include understanding how to best incorporate variability in usage, handle additional capacity requirements during peak production periods, and ensure the feasibility and profitability of the model for all stakeholders involved. The present solution is a modular framework that addresses these issues. This framework leverages advanced technologies such as mathematical models and KGs to ensure the business model and associated contracts may adapt to changing requirements, providing optimal solutions for all parties involved.

Thereby, using the workflow 700, business model and contract are finalized (as represented by block 750). Also, once the contract is in place, its execution is monitored and managed using the mathematical model and the KG. In particular, verification of terms and conditions in contract is executed (as represented by block 752). Furthermore, value-added services may be provided to accommodate the stakeholders' new requirements (as represented by block 754). These may include additional features or enhancements to the machinery, extra services such as training or support, or modifications to the contract terms and conditions. At the end of the contract, the learnings from the process are captured and reused for future contracts (as represented by block 756). This may involve updating the mathematical model and KG based on the actual performance of the machinery, refining the contract terms and conditions based on the outcomes of the contract, and adjusting the stakeholders' requirements based on their feedback and experiences.

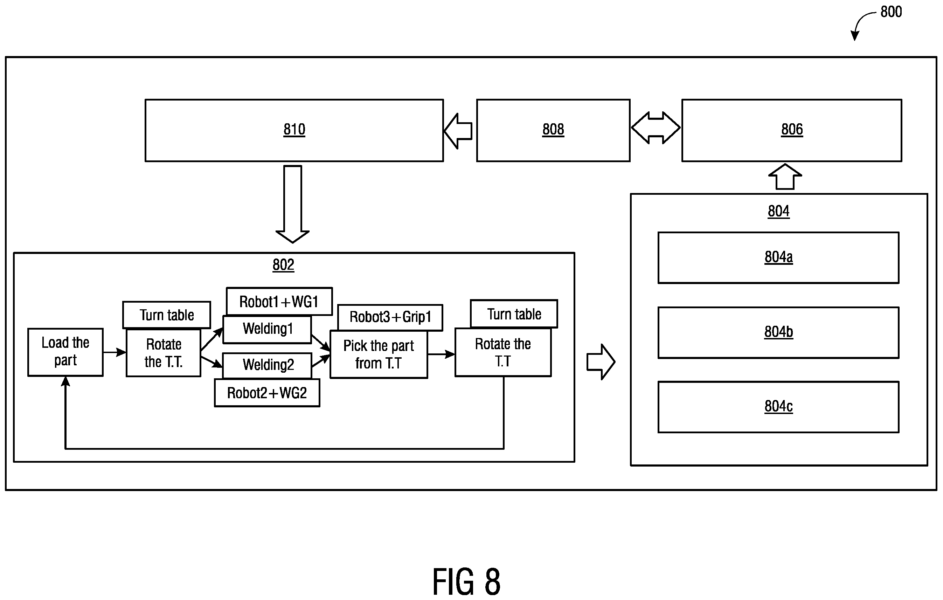

FIG 8 is a representation of implementation of the system 200 for a use-case (as represented by a workflow 800) of manufacturing a Product 'A', in accordance with one or more embodiments of the present invention. The depicted workflow 800 is intricate, involving multiple stages such as welding, sealer application, mastic application, and hemming, each requiring precise coordination and execution. At block 802, the manufacturer's (machinery user's) requirements, like from an automotive manufacturer, are analysed, leading to the generation of a graphical structure through extraction. This graphical structure serves as a foundational representation of the manufacturing process, detailing the interrelations and dependencies between different stages and components. Upon establishment of the graphical structure, at block 804, a recommendation engine initiates the orchestration of mathematical models. This includes mathematical models for turntable sizing (based on load) 804a, mathematical models for robot sizing (based on end-effector) 804b, mathematical models for robot sizing (based on reachability) 804c, and the like. The mathematical models 804a-c are used in determining the sizing of essential components like turntables, robots, and their end effectors, based on the specific processes they are assigned to perform. At block 806, the mathematical models 804a-c are orchestrated. This is not just confined to a single station; similar planning and sizing are executed for all the stations involved in the manufacturing line. The orchestrated mathematical models inform the recommendation engine about the optimal sizing of resources and the planning of processes for each station, ensuring seamless integration and operation throughout the manufacturing line. At block 808, a recommendation engine provides information regarding the sizing of resources, system layout, and individual resource processes in the line to the manufacturer, and also captures values linked to the dynamic business model, ensuring that the manufacturer is equipped with comprehensive insights and suggestions for every aspect of the manufacturing process. At block 810, values generated through orchestration are inherently linked to a dynamic business model, contributing to the holistic view of the manufacturing process. The KPIs captured as values include process efficiency, resource efficiency, uptime, energy efficiency, and product quality. These KPIs serve as measurable outcomes of the implemented processes and resources, allowing for continuous monitoring and optimization of the manufacturing process.

The proposed solution along with the dynamic business model from the recommendation engine may provide manufacturing line to produce Product 'A' which consists of robots with grippers, weld guns, jig, fixtures, turntable, hem press, sealer, mastic systems, water cooling system, pneumatic system, conveyor and PLC. This line can perform all the processes mentioned by automotive manufacturer. The dynamic business model may be in the form of a table (Table 1) as provided below.

**Table 1**

| Dynamic Business Model | | | | | |
|---|---|---|---|---|---|
| Model Number | Cost | Parts/day | Hours/day | Pay per additional part | Pay per additional hour |
| 1 | 10000 | 100 | 5 | 1000 | 500 |
| 2 | 15000 | 180 | 8 | 1500 | 750 |

The machinery user, represented by the manufacturer in the workflow 800, receives captured values, along with recommendations for the sizing of resources, system layouts, and processes, all crucial for upholding high standards of product quality and operational efficiency. The harmonious interplay between the orchestrated mathematical models and the recommendation engine ensures that the manufacturing process is not just optimized, but is also in alignment with the dynamic business model, providing sustainability and efficiency in machinery usage. Thus, the workflow 800 allows for complex manufacturing processes, like those in the automotive sector, by leveraging intelligent systems provided by the machinery provider, optimizing resources, processes, and results in sync with the dynamic business model and the overarching objectives of the machinery user. The methodology outlined herein ensures that the machinery user can meet their manufacturing goals effectively, while the machinery provider can offer optimized, sustainable, and efficient solutions tailored to the user's needs.

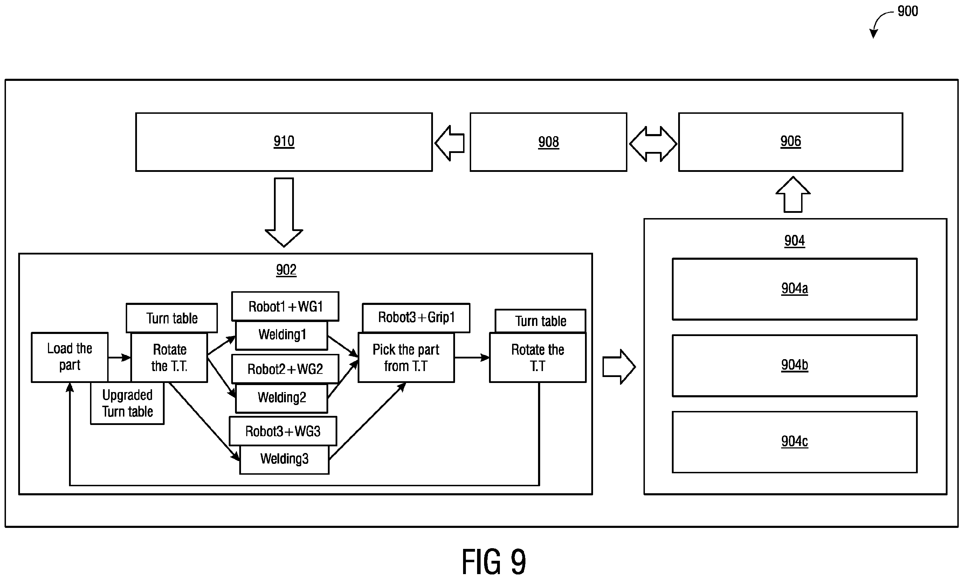

FIG 9 is a representation of the implementation of the system 200 for a specific use-case (as represented by a workflow 900) focused on enhancing the Jobs Per Hour (JPH) of Product 'A', in accordance with one or more embodiments of the present invention. The illustrated workflow 900 demonstrates the system's adaptability and precision in addressing enhanced productivity requirements for Product 'A'. At block 902, new requirements from the same automotive manufacturer (machinery user) as mentioned in FIG 8, are received. The framework, upon receiving these requirements, forms a graphical representation and initiates the process of running through mathematical models to meet the newfound requirement of increasing Jobs Per Hour for Product 'A'. At block 904, the mathematical models orchestrate to provide equations for optimizing various elements like turntable rotations and robot operation times. These mathematical models include mathematical model for turntable upgrades (904a), mathematical model for process alterations to decrease robot operation time (904b), and mathematical model for addition of resources and validation in the existing production line (904c). At block 906, the orchestrated mathematical models are utilized for automated orchestration. This provides the requisite solutions, derives KPIs, and integrates them back into the dynamic business model. This linkage ensures that the enhancements and modifications made in the existing line are coherent with the overall business objectives and operational framework, allowing for integration of upgrades. At block 908, a recommendation engine provides detailed insights and captured values in the form of KPIs to the manufacturer, allowing them to select the most optimal business model aligned with the newfound requirements and operational modifications. These captured values are intrinsically linked to the dynamic business model, providing the manufacturer with insightful recommendations and allowing them to make informed decisions regarding the selection of business models that align with the enhanced operational capabilities. At block 910, the modifications and upgrades proposed by the mathematical models are implemented to augment the Jobs Per Hour of Product 'A'. They allow the manufacturer to make informed and insightful decisions, selecting business models that are not only aligned with the enhanced operational capabilities but are also optimized for increased productivity and efficiency.

The values in the form of KPIs captured from the orchestration will be linked to the dynamic business model and provided to the manufacturer through recommendation engine for choosing the business model. These may include modifications done in existing manufacturing line such as addition of robot with a weld gun and upgraded the turn table and reconfigured it to achieve more productivity for Product 'A'. The dynamic business model may be in the form of a table (Table 2) as provided below.

**Table 2**

| Dynamic Business Model | | | | | |
|---|---|---|---|---|---|
| Model Number | Cost | Parts/day | Hours/day | Pay per additional part | Pay per additional hour |
| 3 | 13000 | 150 | 5 | 1300 | 600 |
| 4 | 17000 | 220 | 8 | 1700 | 850 |

The machinery user, represented by the manufacturer in the workflow 900, receives meticulously captured values and recommendations, crucial for optimizing the Jobs Per Hour of Product 'A'. The synergy between the automated orchestration of mathematical models and the recommendation engine ensures that the enhanced productivity requirements are met efficiently and effectively while maintaining alignment with the dynamic business model, promoting sustainability and efficiency in machinery usage. Thus, the workflow 900 demonstrates how intricate requirements, such as those in automotive production, can benefit from the integration of intelligent systems provided by the machinery provider, optimizing resources, processes, and outcomes in accordance with the dynamic business model and the overarching objectives of the machinery user. The methodology provided herein ensures that the machinery user can proficiently meet their enhanced productivity goals, while the machinery provider can proffer optimized, sustainable, and efficient solutions, tailored to the user's needs.

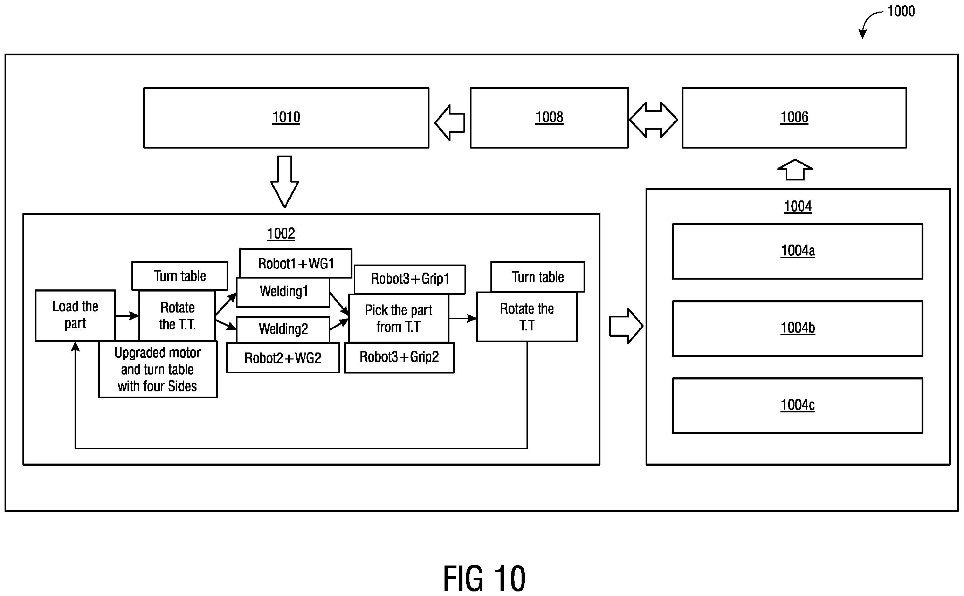

FIG 10 is a depiction of the implementation of the system 200 for another use-case (as represented by a workflow 1000) wherein a new product, 'B', is intended to be manufactured alongside product `A', conforming to one or more embodiments of the present invention. The illustrated workflow 1000 is indicative of the system's versatility and adaptability in integrating new manufacturing requirements within an existing line. At block 1002, the same automotive manufacturer (machinery user) conveys a novel requirement for the manufacturing of a new product 'B' along with the pre-existing product 'A'. Herein, the framework forms a graphical structure representation and initiates the orchestration of mathematical models to accommodate the manufacturing of product 'B' in the same line as product 'A'. At block 1004, the mathematical models are utilized including mathematical model for upgrading the turntable with four sides (1004a), mathematical model for integrating additional grippers in all robots for product 'B' (1004b), and mathematical model for validating the process for product 'B' (1004c). These mathematical models 1004a-c are utilized in proposing modifications and additions to the existing line, ensuring seamless integration of product 'B' into the manufacturing process. At block 1006, the orchestrated mathematical models operate to provide solutions, capture values, and integrate them into the dynamic business model. This process ensures that all modifications and additions made to accommodate product 'B' are coherent with the overall business objectives, allowing for a harmonious and efficient integration of new manufacturing requirements. At block 1008, the manufacturer receives new values created through the orchestrated mathematical models, along with modifications and additions to the existing line. This includes the addition of grippers for material handling robots, fixtures, and die changers to manufacture product 'B' alongside product 'A'. At block 1010, the dynamic business model is refined based on the new values and modifications made to the existing line, and the manufacturer is provided with options to select the most optimal business model aligned with the newfound manufacturing requirements.

Herein, the dynamic business model may be changed according to the new values and provided to the manufacturer to choose the business model. This dynamic business model may include modifications done in existing manufacturing line such as addition of grippers for material handling robots, addition of fixture and addition of die changer for new die to produce Product 'B' along with Product 'A'. The dynamic business model may be in the form of a table (Table 3) as provided below.

**Table 3**

| Dynamic Business Model | | | | | |
|---|---|---|---|---|---|
| Model Number | Cost | Parts/day | Hours/day | Pay per additional part | Pay per additional hour |
| 5 | 20000 | 200 | 10 | 2000 | 800 |
| 6 | 24000 | 310 | 15 | 2300 | 950 |

The machinery user, represented by the manufacturer in the workflow 1000, receives captured values, modifications, and additions, for manufacturing product 'B' alongside product 'A'. The interaction between the orchestrated mathematical models and the dynamic business model ensures that the manufacturing process is not only optimized but also in alignment with the dynamic business model, providing sustainability and efficiency in machinery usage. Thus, the workflow 1000 allows for the integration of new manufacturing requirements like those in the automotive sector, by leveraging intelligent systems provided by the machinery provider, optimizing resources, processes, and results in sync with the dynamic business model and the overarching objectives of the machinery user. The methodology outlined herein ensures that the machinery user can meet their diversified manufacturing goals effectively, while the machinery provider can offer optimized, sustainable, and efficient solutions tailored to the user's expanded needs.

The method 100 and the system 200 of the present invention serve as a solution for managing MaaS contracts, embodying an automated orchestration and KG-assisted layered framework to enable dynamic business models that are utilized for shared factory and flexible manufacturing use cases. By leveraging advanced mathematical models and KG technologies, the present invention integrates real-time data monitoring, performance evaluation, and orchestration of mathematical models to refine the contract management process and optimize machinery performance, thereby enhancing overall stakeholder satisfaction. The use of mathematical models, as opposed to traditional black-box approaches, grants more transparency and speed, catering to multiple user queries instantly and facilitating stakeholders to make informed and efficient decisions regarding the adoption of business models. The present invention also provides the ability to evaluate and rank different solutions through automated orchestration before the implementation of the business model. This enables stakeholders to effectively visualize the impacts of adaptations to changes in requirements, such as reconfiguring or retrofitting the system, through system-level KPIs like uptime, process efficiency, resource efficiency, energy efficiency, and quality of production.

Thus, the present invention brings forth the comprehensive method 100 and the system 200 for managing the MaaS contract. By integrating the concepts of mathematical models, real-time data monitoring, and performance evaluation, it streamlines the contract management process, improves the machinery's performance, and enhances stakeholder satisfaction. The present invention introduces a layered framework for the Paas/Maas business model, aided by mathematical model and KG technologies. The framework is designed to suggest the appropriate business model, providing a level of flexibility to incorporate base services and additional services as per the dynamic needs of the stakeholders. It enables the evaluation of various options using mathematical model orchestration before implementing the business model, thus facilitating informed decision making. A key aspect of the present invention is measuring relevant Key Performance Indicators (KPIs) that are periodically tracked and used to generate payment invoices in dynamic contracts, contributing to the computation of the machinery's lifecycle cost. The framework further integrates the outcome of the mathematical model-based scenario evaluation (such as uptime, energy efficiency, etc.) with the business model (including Subscription-based, Product bundling-based, etc.) using KGs. This feature offers stakeholders valuable insights about their choices after they have been made, aiding in continual evaluation and refinement. The layered framework approach of the present invention enhances the modularity of each technical feature, leading to improved decision-making and risk evaluation for the end customer. Moreover, the framework's capacity to offer add-on services in addition to the base services provides stakeholders with the necessary flexibility to navigate uncertain market situations while still ensuing business commitments are fulfilled. The proposed framework also provides transparency, with KPIs being continuously monitored to generate dynamic business models, thereby increasing stakeholder confidence.

While the present invention has been described in detail with reference to certain embodiments, it should be appreciated that the present invention is not limited to those embodiments. In view of the present invention, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

**REFERENCE NUMERALS**

| | |
|---|---|
| METHOD | 100 |
| STEP | 110 |
| STEP | 120 |
| STEP | 130 |
| STEP | 140 |
| STEP | 150 |
| STEP | 160 |
| STEP | 170 |
| SYSTEM | 200 |
| BUS | 202 |
| PROCESSING UNIT | 204 |
| MEMORY UNIT | 206 |
| INTERFACE | 208 |
| DATABASE | 210 |
| INPUT DEVICE | 212 |
| OUTPUT DEVICE | 14 |
| SET OF MODULES | 216 |
| MACHINERY PROVIDER(S) | 302 |
| MACHINERY USER(S) | 304 |
| FINANCE SERVICE PROVIDER | 306 |
| INSURANCE PROVIDER | 308 |
| ORCHESTRATION MODULE | 310 |
| MARKETPLACE | 312 |
| LIBRARY OF MATHEMATICAL MODELS | 314 |
| MATHEMATICAL MODELS | 316A-316N |
| DERIVED MATHEMATICAL MODELS | 318 |
| MAINTENANCE MODULE | 320 |
| APPLICATION-SPECIFIC SERVICE INSTRUCTIONS | 322 |
| GUIDELINES FOR OPERATORS | 324A |
| TROUBLESHOOTING GUIDELINES | 324B |
| IMMERSIVE INSTRUCTIONS | 326 |
| GUIDELINES FOR SUPPLY CHAIN MANAGEMENT | 328 |
| LEGAL MODULE | 330 |
| RISK QUANTIFICATION | 332A |
| RISK SHARING AGREEMENTS | 332B |
| CONTRACT'S TERMS AND CONDITIONS | 334 |
| PROFIT OR LOSS SHARING TERMS | 336 |
| CONFLICT MANAGEMENT | 338 |
| APPLICATION MODULE | 340 |
| OEM SPECIFIC UI | 342A |
| FINANCE SERVICE PROVIDER SPECIFIC UI | 342B |
| END CUSTOMER SPECIFIC UI | 342C |
| INSURANCE PROVIDER SPECIFIC UI | 342D |
| CYBERSECURITY-ENABLED FEATURES | 344 |
| SEMANTIC INFRASTRUCTURE LAYER | 350 |
| DATA INTEGRATION HANDLER | 352 |
| EXPERT KNOWLEDGE | 354A |
| LITERATURE INFORMATION | 354B |
| TECHNICAL DOCUMENTS | 354C |
| AVAILABLE CONTRACTS | 354D |
| GUIDEBOOKS | 354E |
| SERVICE REPORTS | 354F |
| OTHER INFORMATION | 354G |
| KNOWLEDGE GRAPH | 360 |
| DIGITAL CONTRACT | 362 |
| RELATED DOCUMENTATION | 402 |
| ORCHESTRATION MANAGER | 404 |
| PARAMETER TWEAK HANDLER | 406 |
| VIRTUAL LAYER | 410 |
| PROCESS FLOW | 500 |
| SCENARIO-RELATED VALUE | 500A |
| BUSINESS-RELATED VALUE | 500B |
| APPLICATION LAYER | 502 |
| USERS | 504 |
| GRAPHICAL STRUCTURE EXTRACTION MODULE | 506 |
| ORCHESTRATION MANAGER | 508 |
| LIBRARY/MARKETPLACE | 510 |
| WEB SERVER | 512 |
| DERIVED MATHEMATICAL MODELS | 514 |
| SCENARIO EVALUATION MODULE | 516 |
| RECOMMENDATION SYSTEM | 518 |
| SIMULATION RUNNER MODULE | 520 |
| REAL SYSTEM OR VIRTUAL SYSTEM | 522 |
| CONTRACT HANDLER MODULE | 524 |
| VALUE EVALUATION MODULE | 526 |
| FINANCE HANDLER MODULE | 528 |
| INSURANCE CLAIM HANDLER MODULE | 530 |
| DATA PLOTTER MODULE | 532 |
| FLOWCHART | 600 |
| BLOCK | 602 |
| BLOCK | 604 |
| BLOCK | 606 |
| BLOCK | 608 |
| NATURAL LANGUAGE PROCESSING (NLP) ENGINE | 610 |
| SERVICE LAYER | 612 |
| BLOCK | 614 |
| INTERACTION PROCESS | 616 |
| BLOCK | 618 |
| WORKFLOW | 700 |
| MARKET | 702 |
| GREENFIELD AND BROWNFIELD APPLICATIONS | 710 |
| INITIAL DECISIONS | 720 |
| REQUIREMENTS | 722 |
| OPERATION | 724 |
| BASELINE REQUIREMENTS | 726 |
| DYNAMICALLY CHANGING REQUIREMENTS | 728 |
| END OF CONTRACT | 730 |
| HISTORIC DATA | 732 |
| MACHINERY | 740 |
| BLOCK | 750 |
| BLOCK | 752 |
| BLOCK | 754 |
| BLOCK | 756 |
| WORKFLOW | 800 |
| BLOCK | 802 |
| BLOCK | 804 |
| MATHEMATICAL MODEL | 804A |
| MATHEMATICAL MODEL | 804B |
| MATHEMATICAL MODEL | 804C |
| BLOCK | 806 |
| BLOCK | 808 |
| BLOCK | 810 |
| WORKFLOW | 900 |
| BLOCK | 902 |
| BLOCK | 904 |
| MATHEMATICAL MODEL | 904A |
| MATHEMATICAL MODEL | 904B |
| MATHEMATICAL MODEL | 904C |
| BLOCK | 906 |
| BLOCK | 908 |
| BLOCK | 910 |
| WORKFLOW | 1000 |
| BLOCK | 1002 |
| BLOCK | 1004 |
| MATHEMATICAL MODEL | 1004A |
| MATHEMATICAL MODEL | 1004B |
| MATHEMATICAL MODEL | 1004C |
| BLOCK | 1006 |
| BLOCK | 1008 |
| BLOCK | 1010 |

## Claims

1. A computer-implemented method (100) for managing a machinery-as-a-service contract involving machinery provider(s) and machinery user(s), the method (100) comprising:
receiving, by a processing unit (204), requirements including one or more specific parameters from the machinery user(s) for a machinery;
orchestrating, by the processing unit (204), one or more mathematical models (316a-316n) representative of the machinery to generate a plurality of derived one or more mathematical models (318) based on the one or more specific parameters, wherein the one or more mathematical models (316a-316n) are defined to model properties and behaviours of the machinery;
evaluating, by the processing unit (204), multiple usage scenarios of the machinery based on the received requirements, wherein each of the multiple scenarios is evaluated on each of the plurality of derived one or more mathematical models (318) to simulate performance of the machinery;
defining, by the processing unit (204), a set of Key Performance Indicators (KPIs) for monitoring performance of the machinery based on the evaluated multiple scenarios;
monitoring, by the processing unit (204), operational data associated with usage of the machinery;
comparing, by the processing unit (204), the monitored operational data against the defined set of KPIs to assess the performance of the machinery; and
generating, by the processing unit (204), one or more business models for the machinery provider(s) and the machinery user(s) based on the assessment of the performance of the machinery.

2. The method (100) according to claim 1, wherein the step of orchestrating the one or more mathematical models (316a-316n) representative of the machinery comprises selecting, by the processing unit (204), the one or more mathematical models (316a-316n) from a library of mathematical models (314) based on the received requirements.

3. The method (100) according to claim 1, wherein the step of evaluating multiple usage scenarios of the machinery based on the received requirements comprises implementing, by the processing unit (204), the plurality of derived one or more mathematical models (318) to simulate expected performance of the machinery under the multiple usage scenarios.

4. The method (100) according to claim 1, wherein the step of defining the set of KPIs for monitoring performance of the machinery based on the evaluated multiple scenarios comprises:
identifying, by the processing unit (204), specific parameters in the one or more mathematical models (316a-316n) that are relevant to the received requirements, wherein the specific parameters comprise one or more of physical properties, functional properties, operational conditions, usage patterns, different configuration, retro-fittings, layouts and lifecycle events of the machinery; and
varying, by the processing unit (204), the identified specific parameters within predetermined ranges based on the received requirements to compute values of the set of KPIs.

5. The method (100) according to claim 1, wherein the step of monitoring the operational data associated with usage of the machinery comprises gathering, by the processing unit (204), data related to the performance of the machinery from one or more of: sensors embedded in the machinery, usage logs, and feedback from the machinery user(s).

6. The method (100) according to claim 1, wherein the step of generating the one or more business models based on the assessment of the performance of the machinery comprises generating, by the processing unit (204), a digital contract (362) of a dynamic business model with respective terms and conditions for each of the one or more business models.

7. The method (100) according to claim 6, wherein the terms and conditions comprise one or more of operational parameters, efficiency, lifespan, service levels, pricing, and penalties for non-compliance, related to the machinery based on the defined set of KPIs.

8. The method (100) according to claim 6 further comprising automatically adapting, by the processing unit (204), the terms and conditions of the digital contract based on the assessment of the performance of the machinery.

9. The method (100) according to claim 8, further comprising notifying, by the processing unit (204), the machinery provider(s) and the machinery user(s) regarding the automated adaptations made to the terms and conditions of the digital contract.

10. The method (100) according to claim 6, further comprising alerting, by the processing unit (204), the machinery provider(s) and the machinery user(s) when the performance of the machinery continuously does not meet the defined set of KPIs for a predetermined period.

11. The method (100) according to claim 1 further comprising creating, by the processing unit (204), a knowledge graph (360) by:
collecting data from the defined set of KPIs and the corresponding monitored operational data;
processing the collected data to identify relationships between the KPIs and the corresponding operational data, wherein the relationships include correlations, dependencies, trends, patterns, or anomalies;
assigning semantic tags to the KPIs and the operational data based on the identified relationships;
constructing nodes for the semantically tagged KPIs and the operational data; and
linking the nodes based on the identified relationships to create a network of interconnected nodes that represents the semantic relationships between the KPIs and the operational data.

12. The method (100) according to claim 11 further comprising updating, by the processing unit (204), the knowledge graph (360) in near real-time as new operational data is monitored and/or as the KPIs are updated based on the assessment.

13. The method (100) according to claim 11 further comprising utilizing, by the processing unit (204), the knowledge graph (360) to determine decisions related to the machinery-as-a-service contract, wherein the decisions comprise one or more of defining or adjusting the one or more specific parameters, and comparing the monitored operational data against the defined set of KPIs.

14. A system comprising:
a processing unit (204);
a memory unit communicatively coupled to the processing unit (204), wherein the memory unit comprises a set of modules stored in the form of machine-readable instructions executable by the processing unit (204), wherein the set of modules is configured to perform method (100) steps for managing a machinery-as-a-service contract involving machinery provider(s) and machinery user(s), according to any of the claims 1 to 13.

15. A computer-program machinery, having machine-readable instructions stored therein, that when executed by a processing unit (204), cause the processing unit (204) to perform method (100) steps according to any of the claims 1-13.
